# EUROPEAN PATENT SPECIFICATION

(11) **EP 0 454 832 B1**
(45) Date of publication and mention of the grant of the patent: **28.09.1994**
(21) Application number: 91900461.4
(22) Date of filing: 21.11.1990
(51) Int. Cl.: A23G 3/30

(54) **POLYVINYL ACETATE ENCAPSULATION OF CODRIED SUCRALOSE FOR USE IN CHEWING GUM**
VERKAPSELUNG VON MISCHGETROCKNETER SUCRALOSE MIT POLYVINYLACETAT ZUR VERWENDUNG IN KAUGUMMI
ENCAPSULATION DU SUCRALOSE COSECHE DANS L'ACETATE DE POLYVINYLE POUR L'UTILISATION DANS DU CHEWING GUM

(30) Priority: 22.11.1989 WO PCT/US89/05296
(43) Date of publication of application: 06.11.1991
(73) Proprietor: WM. WRIGLEY JR. COMPANY, Chicago Illinois 60611 (US)
(72) Inventor: YATKA, Robert, J., Orland Park, IL 60462 (US); BRODERICK, Kevin, B., Berwyn, IL 60402 (US); SONG, Joo, H., Northbrook, IL 60062 (US); ZIBELL, Steven, E., Tinley Park, IL 60477 (US); MEYERS, Marc, A., Naperville, IL 60565 (US); CAMBELL, Adebisi, A., Chicago, IL 60626 (US)
(74) Representative: Baverstock, Michael George Douglas
(86) International application number: US9006833
(87) International publication number: WO9107102

(56) References cited:
- EP-A- 0 267 809
- EP-A- 0 273 009
- EP-A- 0 372 695
- WO-A-88/08672
- US-A- 4 343 934
- US-A- 4 384 004
- US-A- 4 405 654
- US-A- 4 435 440
- US-A- 4 495 170
- US-A- 4 549 013
- US-A- 4 612 373
- US-A- 4 820 528

## Description

The present invention relates to chewing gum, and more particularly to the use of a polyvinyl acetate encapsulated, codried sucralose (The term SUCRALOSE is a trademark) in a chewing gum.

Chewing gums comprise many ingredients, including sweeteners. Sweeteners suitable for chewing gums include both natural and artificial sweeteners. Recently, high-intensity sweeteners have been the focus of investigation for use in chewing gum.

High-intensity sweeteners may be hundreds of times sweeter than natural sweeteners such as sucrose and glucose. High-intensity sweeteners of recent interest include aspartame, acesulfame K, cyclamates, saccharin, and now sucralose. Sucralose is a new, high-intensity sweetener which is a tri-chlorinated sucrose derivative and is about 400-800 times sweeter than sucrose. Sucralose has been reported to be cheaper than aspartame and at least 3 times sweeter. Compared to some other high-intensity sweeteners, sucralose has a sweet taste more similar to sucrose. Chemically, sucralose is known as 4,1',6'-trichloro-4,1',6'-trideoxy-galactosucre, or alternatively 1,6'-dichloro-1,6-dideoxy-(β)-D-fructofuranosyl 4-chloro-4-deoxy-(α)-D-galactopyranoside. The United States Food and Drug Administration is now considering sucralose as a food additive. The manufacturer of sucralose is Tate & Lyle, Inc. in the U.K. Sucralose is marketed in the United States by McNeil Specialty Products Co., Skillman, New Jersey. Its use to sweeten substances, including oral compositions, is disclosed in U.S. Patent Nos. 4,343,934 and 4,389,394, both of which are incorporated herein by reference. The use of sucralose as an artificial sweetener is also disclosed in U.K. Patent Nos. 2,065,646; 2,065,648 and 2,153,651. Its use as a sweetener concentrate is disclosed in EP-A-0267809.

The use of sucralose in chewing gum has been disclosed in other patents.

U.S. Patent No. 4,495,170 discloses sweetener mixtures for use in foods, beverages and pharmaceuticals but not specifically chewing gums. The mixtures are of sucralose and aspartame, saccharin, and acesulfame K. U.S. Patent No. 4,389,394 discloses the use of artificial sweeteners in chewing gum to prevent dental caries. Chlorinated sucrose derivatives are disclosed in U.S. Patent Nos. 4,435,440; 4,549,013; and 4,612,373.

U.K. Patent No. 2,154,850 discloses beverages sweetened with sucralose and cyclamate (among others).

U.K. Patent No. 2,185,674 discloses combinations of thaumatin and sucralose (among others) to stimulate growth of farm animals.

U.S. Patent No. 4,820,528 discloses co-dried sucralose and acid saccharin to prolong sweetness release.

In WO 8808622 there is disclosed a chewing gum composition containing sucralose and a fast release sweetener. According to this patent sucralose does not provide significant early sweetness during the initial chewing period. In order to overcome the problem of providing early sweeteness to sucralose sweetened gum this specification suggests addition of a fast release sweetener.

One of the limitations of chewing gum is that the sweetness and flavor are rapidly lost during chewing. Thus, chewing gum producers are constantly trying to extend the time in which a consumer of chewing gum can enjoy its flavor and sweetness.

Patents disclose how a sweetener like aspartame can be physically modified to control the release rate in chewing gum.

For example, U.S. Patent No. 4,597,970 to Sharma et al. teaches a process for producing an agglomerated sweetener wherein the sweetener is dispersed in a hydrophobic matrix consisting essentially of lecithin, a glyceride, and a fatty acid or wax having a melting point between 25 and 100°C. The method disclosed uses a spray-congealing step to form the sweetener-containing matrix into droplets, followed by a fluid-bed second coating on the agglomerated particles.

U.S. Patent Nos. 4,515,769 and 4,386,106, both to Merrit et al., teach a two step process for preparing a delayed release flavorant for chewing gum. In this process, the flavorant is prepared in an emulsion with a hydrophilic matrix. The emulsion is dried and ground and the particles are then coated with a water-impermeable substance.

U.S. Patent No. 4,230,687 to Sair et al. teaches a process for encasing an active ingredient to achieve gradual release of the ingredient in a product such as chewing gum. The method described involves adding the ingredient to an encapsulating material in the form of a viscous paste. High-shear mixing is used to achieve a homogeneous dispersion of the ingredient within the matrix, which is subsequently dried and ground.

U.S. Patent No. 4,139,639 to Bahoshy et al. teaches a process of "fixing" aspartame by co-drying (by spray drying or fluid-bed coating) a solution containing aspartame and an encapsulating agent, such as gum arabic, to thereby surround and protect the aspartame in the gum during storage.

U.S. Patent No. 4,384,004 to Cea et al. teaches a method of encapsulating aspartame with various solutions of encapsulating agents using various encapsulation techniques, such as spray drying, in order to increase the shelf-stability of the aspartame.

U.S. Patent No. 4,634,593 to Stroz et al. teaches a method for producing controlled release sweeteners for confections, such as chewing gum. The method taught therein involves the use of an insoluble fat material which is mix mulled with the sweetener.

PCT Publication WO 90/07859 discloses a number of techniques, including encapsulation techniques, for delaying the release of sucralose from chewing gum. In example 18 of the publication, sucralose is mixed with polyvinyl acetate and the combined material is added to other gum base ingredients and made into gum.

It is known that the sweetness and flavor can be extended in chewing gum by using high levels of high intensity sweeteners such as aspartame. The extension properties of those sweeteners, however, are limited by their release characteristics during chewing of the gum. Providing a chewing gum having improved sweetness and flavor extension is one object of this invention.

Sucralose, when modified according to the present invention and incorporated into chewing gum, gives a chewing gum having a controlled-release sweetener. A higher quantity of sweetener can be used without resulting in excessive initial sweetness, but instead having a delayed sweetness release, giving a highly consumer-acceptable chewing gum product.

The present invention provides a method of making a blended ingredient consisting essentially of sucralose, a co-drying agent and PVAc for chewing gum comprising the steps of:
(a) codrying sucralose with a codrying agent,
(b) homogeneously mixing 50 to 97 parts by weight heat-softened polylvinyl acetate with 3 to 50 parts by weight of the codried sucralose,
   and
(c) cooling the homogenous mixture, leaving a blended sucralose containing ingredient.

The present invention provides a method of producing chewing gum comprising the steps of:
(a) providing a blended ingredient consisting essentially of sucralose, a co-drying agent and PVAc by
   i) codrying sucralose with a codrying agent;
   ii) homogeneously mixing 50 to 97 parts by weight heat-softened polylvinyl acetate with 3 to 50 parts by weight of the codried sucralose;
   iii) cooling the homogenous mixture; and
(b) mixing
   i) 0.02% to 20% by weight of the chewing gum of the blended sucralose-containing ingredient,
   ii) 5% to 80% by weight of the chewing gum of a base,
   iii) 5% to 80% by weight of the chewing gum of a bulking agent, and
   iv) 0.25% to 5% by weight of a flavoring agent to make the chewing gum composition.

It has been found that the sucralose incorporated in chewing gum using the sucralose-containing ingredient of the present invention is surprisingly slow to release from the gum. Thus the invention provides a very simple but effective delay release mechanism for sucralose.

As used herein, the term "chewing gum" includes chewing gum, bubble gum and the like. Unless specified otherwise, all percents used herein are weight percents.

The first step in preparing the sucralose-containing ingredient of the present invention is to codry the sucralose with a codrying agent. Codrying is a general term for a process in which an active ingredient and a carrier or codrying agent are dissolved or suspended in a liquid carrier which is then evaporated to produce an intimately mixed, dry combination ingredient. Specific processes for carrying out codrying operations include the well known processes of spray drying, freeze drying and moist granulation. The moist granulation process has been disclosed in U.S. Patent No. 4,863,745, incorporated herein by reference.

Any codrying method can be used, with spray drying and moist granulation being preferred. With some codrying agents, freeze drying may also be suitable.

The most preferred codrying agent is maltodextrin. Other preferred codrying agents include hydroxy propyl methyl cellulose, gum arabic and hydroxy propyl cellulose. The ratio of sucralose to codrying agent in the codried product is contemplated to be from 20% and 80%. Levels of from 35% to 65% are preferred, with 50% being most preferred.

The next step is to homogeneously mix heat-softened PVAc and the codried sucralose. The PVAc used in the present invention will be a food grade polymer. The molecular weight of the polymer is not believed to be critical to working of the invention, but certain molecular weights may be easier to use to produce the blended ingredient and others may be more effective at extending the release rate of sucralose. Specifically, lower molecular weights of PVAc tend to be easier to mix and reduce the effort necessary to clean out the mixing apparatus afterwards. However, there is some evidence that higher molecular weights provide slightly slower release.

The contemplated molecular weight range of PVAc usable in the present invention is from 7000 to 100,000 molecular weight units (MWU). The preferred range is from 10,000 MWU to 50,000 MWU and most preferred are polymers of from 15,000 MWU to 32,000 MWU. (The preceding molecular weight numbers are based on average molecular weight as measured by Gel Permeation Chromatography. Other methods of measuring molecular weights of polymers may give substantially different values.)

The level of codried sucralose used in the PVAc blend can vary greatly. An upper limit would be just below the amount where the sucralose loading is so high that the PVAc can no longer form a film upon cooling. Levels of sucralose in the final blend in the range of from 3% to 50% are specifically contemplated, while from 15% to 35% is preferred. The most preferred level is from 20% to 30%. The exact level chosen will depend on the intended usage level of this ingredient in the final gum composition.

A variety of methods of preparing the PVAc/sucralose blends of the present invention are contemplated. A fiber spinning method as disclosed in WO 9012512 and WO 9012511, incorporated herein by reference, may be used. The PVAc/sucralose blend may also be mixed in a conventional sigma blade gum mixer. Any other type of mixer suitable for the task may also be used. Usually heat will be used to soften the PVAc to aid mixing. Preferred temperatures for mixing are in the range of 38 to 100°C (100 to 212°F)

In the mixing process, the PVAC may be softened before mixing it with the codried sucralose. Alternatively, the PVAc and codried sucralose may be mixed together and then heated. After the mixing process, the blended ingredient must be cooled. After cooling, the ingredient is preferably sized, usually by grinding and/or sieving to provide the desired particle size. The particle size should be small enough so as not to be noticeable in the finished gum. Excessively fine particles may lose some of the slow release benefit, but in practice, this is not a serious problem. The preferred particle size is less than about 420»m. Usually a size range of from 80»m to 400»m is desirable.

The usage level of the encapsulated ingredient in gum will vary with the active level of sucralose in the encapsulation. In general, the usage level will be calculated to give a desired level of active sucralose in the gum. Usage levels of the encapsulated ingredient of from 0.02 percent to 20 percent are therefore contemplated. The actual optimized usage level may be higher than might be theoretically calculated due to the slower release rate of the blended ingredient. Depending on the desired sweetness level and the presence of other sweeteners in the gum, the active sucralose level may vary from 0.01% to 0.50% or even higher.

In general, a chewing gum composition typically comprises a water-soluble bulk portion, a water-insoluble chewable gum base portion and typically water-insoluble flavoring agents. The water-soluble portion dissipates with a portion of the flavoring agent over a period of time during chewing. The gum base portion is retained in the mouth throughout the chew.

The insoluble gum base generally comprises elastomers, resins, fats and oils, waxes, softeners and inorganic fillers. Elastomers may include polyisobutylene, isobutylene-isoprene copolymer and styrene butadiene rubber, as well as natural latexes such as chicle. Resins include polyvinyl acetate and terpene resins. Fats and oils may also be included in the gum base, including tallow, hydrogenated and partially hydrogenated vegetable oils, and cocoa butter. Commonly employed waxes include paraffin, microcrystalline and natural waxes such as beeswax and carnauba. According to the preferred embodiment of the present invention, the insoluble gum base constitutes from 5 to 80 percent by weight of the gum. More preferably the insoluble gum base comprises between 10 and 50 percent by weight of the gum and most preferably from 20 to 35 percent by weight of the gum.

The gum base typically also includes a filler component. The filler component may be calcium carbonate, magnesium carbonate, talc, dicalcium phosphate or the like. The filler may constitute from 5 to 60 percent by weight of the gum base. Preferably, the filler comprises from 5 to 50 percent by weight of the gum base.

Gum bases typically also contain softeners, including glycerol monostearate and glycerol triacetate. Further, gum bases may also contain optional ingredients such as antioxidants, colors, and emulsifiers. The present invention contemplates employing any commercially acceptable gum base.

The water-soluble portion of the chewing gum may further comprise softeners, sweeteners, flavoring agents and combinations thereof. Softeners are added to the chewing gum in order to optimize the chewability and mouth feel of the gum. Softeners, also known in the art as plasticizers or plasticizing agents, generally constitute from 0.5 to 15.0 percent by weight of the chewing gum. Softeners contemplated by the present invention include glycerin, lecithin, and combinations thereof. Further, aqueous sweetener solutions such as those containing sorbitol, hydrogenated starch hydrolysates, corn syrup and combinations thereof may be used as softeners and binding agents in gum.

The sucralose-containing ingredient of the present invention will most likely be used in sugarless gum formulations. However, formulations containing sugar are also within the scope of the invention. Sugar sweeteners generally include saccharide- containing components commonly known in the chewing gum art which comprise, but are not limited to, sucrose, dextrose, maltose, dextrin, dried invert sugar, fructose, levulose, galactose, corn syrup solids and the like, alone or in any combination. Generally sugarless sweeteners include components with sweetening characteristics but which are devoid of the commonly known sugars and comprise, but are not limited to, sugar alcohols such as sorbitol, mannitol, xylitol, hydrogenated starch hydrolysates, maltitol and the like, alone or in any combination.

These sugar and sugarless sweeteners often also serve the role as bulking agents in chewing gum. The bulking agent generally comprises from 5 percent to 80 percent of the gum composition.

Depending on the particular sweetness release profile and shelf-stability needed, the sucralose-containing ingredient of the present invention can also be used in combination with uncoated high-potency sweeteners or with high-potency sweeteners coated with other materials and by other techniques. In particular, sucralose treated to increase its release rate as described in WO 8808672 incorporated herein by reference, may be used in conjunction with the present invention.

A flavoring agent may be present in the chewing gum in an amount within the range of from 0.1 to 10.0 weight percent and preferably from 0.25 to 5 weight percent of the gum. The flavoring agents may comprise essential oils, synthetic flavors, or mixture thereof including, but not limited to, oils derived from plants and fruits such as citrus oils, fruit essences, peppermint oil, spearmint oil, clove oil, oil of wintergreen, anise, and the like. Artificial flavoring components are also contemplated for use in gums of the present invention. Those skilled in the art will recognize that natural and artificial flavoring agents may be combined in any sensorially acceptable blend. All such flavors and flavor blends are contemplated by the present invention.

Optional ingredients such as colors, emulsifiers and pharmaceutical agents may be added to the chewing gum.

In general, chewing gum is manufactured by sequentially adding the various chewing gum ingredients to a commercially available mixer known in the art. After the ingredients have been thoroughly mixed, the gum mass is discharged from the mixer and shaped into the desired form, such as by rolling into sheets and cutting into sticks, extruding into chunks or casting into pellets.

Generally, the ingredients are mixed by first melting the gum base and adding it to the running mixer. The base may also be melted in the mixer itself. Color or emulsifiers may also be added at this time. A softener such as glycerin may also be added at this time, along with syrup and a portion of the bulking agent. Further portions of the bulking agent may then be added to the mixer. A flavoring agent is typically added with the final portion of the bulking agent.

The entire mixing procedure typically takes from five to fifteen minutes, but longer mixing times may sometimes be required. Those skilled in the art will recognize that many variations of the above described procedure may be followed.

The blended sucralose-containing ingredient may be added at any point in the gum making process. The preferred point is with the first bulk sweetener addition. Very early addition into hot base is undesirable since the PVAc may soften or melt.

### Example 1:

A spray dried sucralose composition was prepared by dissolving 800g of sucralose and 800g maltodextrin in 2400g of distilled water. The pH of the water was adjusted to 5.9 by addition of 10% citric acid solution. This solution was heated to 35°C (95°F) and fed into a Niro spray drier. The inlet temperature was 195°C, and the outlet temperature was 80°C. The nozzle was in a counter-current position. The run took 27 minutes.

The spray dried sucralose was next used to prepare a PVAc blend. Ground PVAc having a molecular weight of 15,000 was dry blended with the spray dried sucralose in an 80:20 ratio (by weight PVA: spray dried product). The dry blend was added to a sigma blade mixer at 54°C (130°F) and mixed until homogeneous, about 10 minutes. The mixture was then cooled and ground in a Fitzmill grinder with a 2.77mm (0.109 inch) screen. The product was then sieved and the fraction between 44»m and 420»m (40 and 325 U.S. Standard Mesh size) was used. The product contained 10% sucralose by weight.

### Example 2:

The method of Example 1 was repeated except that the ratio of PVAc to spray dried material in the PVAc/codried sucralose blend was 70:30. The product contained 15% sucralose by weight.

### Examples 3:

The method of Example 1 was repeated except that the ratio of PVAc to spray dried material in the PVAc/codried sucralose blend was 60:40. The product contained 20% sucralose by weight.

### Examples 4, 5, 6 (Chewing Gums):

Chewing gums were made according to the following formulas (in percent by weight).

| | Example 4 | Example 5 | Example 6 |
|---|---|---|---|
| Sugar | 53.455 | 53.555 | 53.605 |
| Base | 22.255 | 22.255 | 22.255 |
| Corn Syrup | 5.130 | 5.130 | 5.130 |
| Glycerin | 2.000 | 2.000 | 2.000 |
| Calcium Carbonate | 2.000 | 2.000 | 2.000 |
| 10% Salt Solution | 0.100 | 0.100 | 0.100 |
| Dextrose | 13.410 | 13.410 | 13.410 |
| Spearmint Flavor | 1.350 | 1.350 | 1.350 |
| Ingredient of Ex. 1 | 0.300 | - | - |
| Ingredient of Ex. 2 | - | 0.200 | - |
| Ingredient of Ex. 3 | - | - | 0.150 |
| | 1̅0̅0̅.̅0̅0̅0̅ | 1̅0̅0̅.̅0̅0̅ | 1̅0̅0̅.̅0̅0̅0̅ |
| Active Sweetener | 0.0300 | 0.0300 | 0.0300 |

### Analytical Release Rate

The gums of Examples 4, 5 and 6 were chewed by several individuals for 0, 2, 5, 10 and 20 minutes. The cuds were collected and analyzed for residual sweetener to determine the release rates. The results are tabulated below.

**Table 1**

| Chew Out Test Results | | |
|---|---|---|
| Example 4 (10% Loading): | Level (%) | % of Orig. Remaining |
| Theoretical (0 min.) | 0.0300 | - |
| Analyzed (0 min.) | 0.0190 | 100 |
| 2 min. | 0.0127 | 67 |
| 5 min. | 0.0088 | 46 |
| 10 min. | 0.00060 | 32 |
| 20 min. | 0.00029 | 15 |

| Example 5 (15% Loading): | Level (%) | % of Orig. Remaining |
|---|---|---|
| Theoretical (0 min.) | 0.0300 | - |
| Analyzed (0 min.) | 0.0184 | 100 |
| 2 min. | 0.0129 | 70 |
| 5 min. | 0.0090 | 49 |
| 10 min. | 0.0062 | 34 |
| 20 min. | 0.0031 | 17 |

| Example 6 (20% Loading): | Level (%) | % of Orig. Remaining |
|---|---|---|
| Theoretical (0 min.) | 0.0300 | - |
| Analyzed (0 min.) | 0.0169 | 100 |
| 2 min. | 0.0137 | 81 |
| 5 min. | 0.0105 | 62 |
| 10 min. | 0.0065 | 38 |
| 20 min. | 0.0038 | 22 |

In previous tests with similar gum formulas, with crystalline sucralose mixed directly into the gum, some of which are disclosed in WO 8808672, the gum retained approximately 20% of its original sucralose level after 20 minutes of chewing. Ethanol and aqueous solutions of sucralose mixed directly into gum produced gums that retained less than 10% of their original level after 20 minutes of chewing. Thus, in comparison, the results in Table 1 show that the codried and encapsulated sucralose of the present invention has a comparable delayed release from chewing gum when compared to mixing crystalline sucralose directly into the gum. However, the sucralose containing ingredient itself has better storage stability than dry, crystalline sucralose. Also, it exhibits slower release than prior art spray dried and solution forms of storage stable sucralose.

In addition to slowing the release rate of sucralose from gum during chewing, the present invention offers certain other practical benefits. The volume of material added is increased by the bulking effect of the PVAc, allowing easier and more homogeneous mixing into the gum. The codried sucralose is stable, allowing long-term storage of the sucralose in this form prior to manufacture of the PVAc blend. This is in contrast to pure, crystalline sucralose, which is somewhat unstable. The PVAc/sucralose ingredient is also stable, both when stored as an ingredient and in the gum.

## Claims

1. A method of making a blended ingredient consisting essentially of sucralose, a co-drying agent and PVAc for chewing gum comprising the steps of:
(a) codrying sucralose with a codrying agent,
(b) homogeneously mixing 50 to 97 parts by weight heat-softened polylvinyl acetate with 3 to 50 parts by weight of the codried sucralose,
and
(c) cooling the homogenous mixture, leaving a blended sucralose containing ingredient.

2. A method of producing chewing gum comprising the steps of:
(a) providing a blended ingredient consisting essentially of sucralose, a co-drying agent and PVAc by
i) codrying sucralose with a codrying agent;
ii) homogeneously mixing 50 to 97 parts by weight heat-softened polylvinyl acetate with 3 to 50 parts by weight of the codried sucralose;
iii) cooling the homogenous mixture; and
(b) mixing
i) 0.02% to 20% by weight of the chewing gum of the blended sucralose-containing ingredient,
ii) 5% to 80% by weight of the chewing gum of a base,
iii) 5% to 80% by weight of the chewing gum of a bulking agent, and
iv) 0.25% to 5% by weight of a flavoring agent to make the chewing gum composition.

3. A method as claimed in claim 1 or claim 2 wherein the polylvinyl acetate is softened by heating the polylvinyl acetate before mixing it with the codried sucralose.

4. A method as claimed in claim 1 or claim 2 wherein the polylvinyl acetate is softened by heating after being blended with the codried sucralose.

5. A method as claimed in any one of claims 1 to 4 further comprising the step of sizing the blended sucralose-containing ingredient to a particle size small enough to be unnoticeable when mixed into a chewing gum composition.

6. A method as claimed in claim 5 wherein the blended sucralose-containing ingredient is sized to less than about 420 »m.

7. A method as claimed in claim 5 wherein the blended sucralose-containing ingredient is sized to between 80 »m and 400 »m.

8. A method as claimed in any one of claims 1 to 7 wherein the blended sucralose-containing ingredient has a sucralose level between 3% and 50%.

9. A method as claimed in any one of claims 1 to 7 wherein the blended sucralose-containing ingredient has a sucralose level of between 15% and 35%.

10. A method as claimed in any one of claims 1 to 7 wherein the blended sucralose-containing ingredient has a sucralose level of between 20% to 30%.

11. A method as claimed in any one of claims 1 to 10 wherein the polylvinyl acetate has an average molecular weight of between 15,000 MWU and 100,000 MWU as measured by Gel Permeation Chromatography.

12. A method as claimed in any one of claims 1 to 10 wherein the polylvinyl acetate has an average molecular weight of between 15,000 MWU and 50,000 MWU as measured by Gel Permeation Chromatography.

13. A method as claimed in any one of claims 1 to 12 wherein the sucralose is codried by spray drying it with the codrying agent.

14. A method as claimed in any one of claims 1 to 12 wherein the sucralose is codried by granulating it with the codrying agent.

15. A method as claimed in any one of claims 1 to 12 wherein the sucralose is codried by freeze drying it with the codrying agent.

16. A method as claimed in any one of claims 1 to 15 wherein the codrying agent is selected from maltodextrin, hydroxy propyl methyl cellulose, gum arabic, modified starches and hydroxy propyl cellulose.

17. A method as claimed in any one of claims 1 to 16 wherein the level of sucralose in the codried sucralose is between 20% and 80%.

18. A method as claimed in any one of claims 2 to 17 wherein the level of sucralose in the gum is between 0.01% and 0.5%.

## Patentansprüche

1. Verfahren zum Herstellen einer Mischung, die im wesentlichen besteht aus Sucralose, einem Co-Trocknungsmittel und PVAc, für Kaugummi, umfassend die Schritte:
(a) Co-Trocknen von Sucralose mit einem Co-Trocknungs- mittel,
(b) homogenes Vermischen von 50 bis 97 Gewichsteilen von durch Wärme erweichtem Polyvinylacetat mit 3 bis 50 Gewichtsteilen der co-getrockneten Sucralose, und
(c) Abkühlen der homogenen Mischung, wobei eine Sucralose enthaltende Mischung erhalten wird.

2. Verfahren zum Herstellen von Kaugummi, umfassend die Schritte:
(a) Bereitstellen einer Mischung, im wesentlichen bestehend aus Sucralose, einem Co-Trocknungsmittel und PVAc, durch
(i) Co-Trocknen von Sucralose mit einem Co-Trocknungsmittel;
(ii) homogenes Vermischen von 50 bis 97 Gewichtsteilen von durch Wärme erweichtem Polyvinylacetat mit 3 bis 50 Gewichtsteilen der cogetrockneten Sucralose; (iii) Abkühlen der homogenen Mischung; und
(b) Mischen von
(i) 0,02 Gew.-% bis 20 Gew.-% des Kaugummis an der Sucralose enthaltenden Mischung,
(ii) 5 Gew.-% bis 80 Gew.-% des Kaugummis an einem Grundbestandteil,
(iii) 5 Gew.-% bis 80 Gew.-% des Kaugummis an einem Bulkingmittel (bulking agent), und
(iv) 0,25 Gew.-% bis 5 Gew.-% eines Aromamittels, um die Kaugummizusammensetzung herzustellen.

3. Verfahren wie in einem der Ansprüche 1 oder 2 beansprucht, worin das Polyvinylacetat erweicht wird durch Erwärmen des Polyvinylacetats vor seinem Mischen mit der co-getrockneten Sucralose.

4. Verfahren wie in einem der Ansprüche 1 oder 2 beansprucht, worin das Polyvinylacetat erweicht wird durch Erwärmen, nachdem es mit der co-getrockneten Sucralose vermischt worden ist.

5. Verfahren wie in einem der Ansprüche 1 bis 4 beansprucht, das weiterhin den Schritt umfaßt die Sucralose enthaltende Mischung auf eine Partikelgröße einzustellen, die klein genug ist, um unbemerkt zu bleiben, wenn sie in eine Kaugummizusammensetzung gemischt wird.

6. Verfahren wie in Anspruch 5 beansprucht, worin die Sucralose enthaltende Mischung auf eine Größe von weniger als ungefähr 420 »m eingestellt wird.

7. Verfahren wie in Anspruch 5 beansprucht, worin die Sucralose enthaltende Mischung auf eine Größe zwischen 80 »m und 400 »m eingestellt wird.

8. Verfahren wie in einem der Ansprüche 1 bis 7 beansprucht, worin die Sucralose enthaltende Mischung einen Sucralosespiegel zwischen 3 und 50 % besitzt.

9. Verfahren wie in einem der Ansprüche 1 bis 7 beansprucht, worin die Sucralose enthaltende Mischung einen Sucralosespiegel zwischen 15 und 35 % besitzt.

10. Verfahren wie in einem der Ansprüche 1 bis 7 beansprucht, worin die Sucralose enthaltende Mischung einen Sucralosespiegel zwischen 20 bis 30 % besitzt.

11. Verfahren wie in einem der Ansprüche 1 bis 10 beansprucht, worin das Polyvinylacetat ein mittleres Molekulargewicht zwischen 15000 MWU und 100000 MWU besitzt, anhand von Gelausschlußchromatographie ermittelt.

12. Verfahren wie in einem der Ansprüche 1 bis 10 beansprucht, worin das Polyvinylacetat ein mittleres Molekulargewicht zwischen 15000 MWU und 50000 MWU besitzt, wie durch Gelausschlußchromatographie ermittelt.

13. Verfahren wie in einem der Ansprüche 1 bis 12 beansprucht, worin die Sucralose co-getrocknet wird durch Sprühtrocknen desselben mit dem Co-Trocknungsmittel.

14. Verfahren wie in einem der Ansprüche 1 bis 12 beansprucht, worin die Sucralose co-getrocknet wird durch Granulieren desselben mit dem Co-Trocknungsmittel.

15. Verfahren wie in einem der Ansprüche 1 bis 12 beansprucht, worin die Sucralose co-getrocknet wird durch Gefriertrocknen desselben mit dem Co-Trocknungsmittel.

16. Verfahren wie in einem der Ansprüche 1 bis 15 beansprucht, worin das Co-Trocknungsmittel ausgewählt wird aus Maltodextrin, Hydroxypropylmethylcellulose, Gummi arabicum, modifizierten Stärken und Hydroxypropylcellulose.

17. Verfahren wie in einem der Ansprüche 1 bis 16 beansprucht, worin der Spiegel an Sucralose in der co-getrockneten Sucralose zwischen 20 % und 80 % liegt.

18. Verfahren wie in einem der Ansprüche 2 bis 17 beansprucht, worin der Spiegel an Sucralose in dem Gummi zwischen 0,01 % und 0,5 % liegt.

## Revendications

1. Procédé de préparation d'un ingrédient mélangé, constitué essentiellement de sucralose, d un agent de co-séchage et de PVAc, pour une gomme à mâcher, comprenant les étapes consistant à :
(a) faire co-sécher du sucralose avec un agent de co-séchage,
(b) mélanger jusqu'à homogénéité 50 à 97 parties en poids d'acétate de polyvinyle ramolli à la chaleur avec 3 à 50 parties en poids du sucralose co-seché, et
(c) refroidir le mélange homogène, laissant un ingrédient mélangé contenant du sucralose.

2. Procédé de préparation d'une gomme à mâcher, comprenant les étapes consistant a :
(a) fournir un ingrédient mélangé constitué essentiel-lement de sucralose, d'un agent de co-séchage et de PVAc, en :
i) faisant co-sécher du sucralose avec un agent de co-séchage,
ii) mélangeant jusqu'à homogénéité 50 à 97 parties en poids d'acétate de polyvinyle ramolli à la chaleur avec 3 à 50 parties en poids du sucralose co-séché,
iii) refroidissant le mélange homogène ; et
(b) mélanger :
i) 0,02 % à 20 % en poids d'ingrédient mélangé contenant du sucralose, par rapport à la gomme à mâcher,
ii) 5 % à 80 % en poids d'une base, par rapport à la gomme à mâcher,
iii) 5 % à 80 % en poids d'un agent de charge, par rapport à la gomme à mâcher, et
iv) 0,25 % à 5 % en poids d'un agent aromatisant, pour préparer la composition de gomme à mâcher.

3. Procédé tel que revendiqué dans la revendication 1 ou la revendication 2, où on ramollit l'acétate de polyvinyle en le chauffant avant de le mélanger avec le sucralose co-séché.

4. Procédé tel que revendiqué dans la revendication 1 ou la revendication 2, où on ramollit l'acétate de polyvinyle en le chauffant après l'avoir mélangé avec le sucralose co-séché.

5. Procédé tel que revendiqué dans l'une quelconque des revendications 1 à 4, comprenant, en outre, l'étape qui consiste à cribler l'ingrédient mélangé contenant du sucralose pour obtenir une dimension de particules suffisamment petite pour que celles-ci ne soient pas perceptibles quand l'ingrédient est mélangé dans une composition de gomme à mâcher.

6. Procédé tel que revendiqué dans la revendication 5, où l'ingrédient mélangé contenant du sucralose est criblé de façon à avoir une dimension de particules de moins d'environ 420 »m.

7. Procédé tel que revendiqué dans la revendication 5, où l'ingrédient mélangé contenant du sucralose est criblé de façon à avoir une dimension de particules comprise entre 80 »m et 400 »m.

8. Procédé tel que revendiqué dans l'une quelconque des revendications 1 à 7, où l'ingrédient mélangé contenant du sucralose contient entre 3 % et 50 % de sucralose.

9. Procédé tel que revendiqué dans l'une quelconque des revendications 1 à 7, où l'ingrédient mélangé contenant du sucralose contient entre 15 % et 35 % de sucralose.

10. Procédé tel que revendiqué dans l'une quelconque des revendications 1 à 7, où l'ingrédient mélangé contenant du sucralose contient entre 20 % et 30 % de sucralose.

11. Procédé tel que revendiqué dans l'une quelconque des revendications 1 à 10, où l'acétate de polyvinyle a un poids moléculaire moyen compris entre 15 000 MWU (unités de poids moléculaire) et 100 000 MWU, mesuré par chromatographie par perméation de gel.

12. Procédé tel que revendiqué dans l'une quelconque des revendications 1 à 10, où l'acétate de polyvinyle a un poids moléculaire moyen compris entre 15 000 MWU et 50 000 MWU, mesuré par chromatographie par perméation de gel.

13. Procédé tel que revendiqué dans l'une quelconque des revendications 1 à 12, où le sucralose est co-séché par séchage par pulvérisation avec l'agent de co-séchage.

14. Procédé tel que revendiqué dans l'une quelconque des revendications 1 à 12, où le sucralose est co-séché par granulation avec l'agent de co-séchage.

15. Procédé tel que revendiqué dans l'une quelconque des revendications 1 à 12, où le sucralose est co-séché par lyophilisation avec l'agent de co-séchage.

16. Procédé tel que revendiqué dans l'une quelconque des revendications 1 à 15, où on choisit l'agent de co-séchage parmi la maltodextrine, 1'hydroxypropylméthyl-cellulose, la gomme arabique, des amidons modifiés et l'hydroxypropylcellulose.

17. Procédé tel que revendiqué dans l'une quelconque des revendications 1 à 16, où la quantité de sucralose dans le sucralose co-séché est comprise entre 20 % et 80 %.

18. Procédé tel que revendiqué dans l'une quelconque des revendications 2 à 17, où la quantité de sucralose dans la gomme est comprise entre 0,01 % et 0,5 %.
